# EUROPÄISCHE PATENTSCHRIFT

(11) **EP 1 511 971 B1**
(45) Veröffentlichungstag und Bekanntmachung des Hinweises auf die Patenterteilung: **14.04.2010**
(21) Anmeldenummer: 03735412.3
(22) Anmeldetag: 17.05.2003
(51) Int. Cl.: G01C 9/20, G01C 9/06

(54) **OPTISCHER NEIGUNGSMESSER**
OPTICAL INCLINOMETER
INCLINOMETRE OPTIQUE

(30) Priorität: 07.06.2002 CH 200209256
(43) Veröffentlichungstag der Anmeldung: 09.03.2005
(73) Patentinhaber: Leica Geosystems AG, 9435 Heerbrugg (CH)
(72) Erfinder: ERNE, Kurt, A-6710 Nenzing (AT); GIGER, Kurt, CH-9464 Rüthi (CH)
(74) Vertreter: Kaminski, Susanne
(86) Internationale Anmeldenummer: PCT/EP2003/005206
(87) Internationale Veröffentlichungsnummer: WO 2003/104748

(56) Entgegenhaltungen:
- EP-A- 0 908 699
- DE-A- 3 639 284
- DE-A- 19 854 812
- US-A- 5 794 355
- PATENT ABSTRACTS OF JAPAN vol. 013, no. 349 (P-911), 7. August 1989 (1989-08-07) & JP 01 109206 A (ASAHI OPTICAL CO LTD), 26. April 1989 (1989-04-26)

## Beschreibung

Die Erfindung betrifft einen optischen Neigungsmesser nach dem Oberbegriff des Anspruchs 1, ein Verfahren zur Messung der Neigung eines Gerätes nach dem Oberbegriff des Anspruchs 17 sowie ein geodätisches Gerät mit einem solchen Neigungsmesser.

Neigungsmesser verschiedener Bauarten finden seit langem Anwendung in allen Bereichen, in denen die Lage eines Gerätes berücksichtigt werden muss. Dies gilt insbesondere für Messungen im geodätischen Bereich oder im Bauwesen.

Während für hochpräzise Messungen verschiedene Realisierungsformen mit komplexem Aufbau bekannt sind, fehlen bisher einfache und robuste Neigungsmesser, die dennoch eine hinreichende Genauigkeit besitzen.

In der US 5,392,112 wird ein Neigungswinkelmesser beschrieben, der einen Lichtstrahl in zwei Teilstrahlen aufteilt, die nach der jeweiligen Reflexion an einer gerätefesten Oberfläche und einer Flüssigkeitsoberfläche auf einem Detektor abgebildet und dort registriert werden. Aus der relativen Position der Aufpunkte beider Teilstrahlen wird auf den Neigungswinkel des Gerätes geschlossen.

Aus der Offenlegungsschrift DE 41 10 858 ist ein zweiachsiger Neigungsmesser bekannt, bei dem eine geometrische Figur über einen neigungsempfindlichen und strahlablenkenden Sensor auf ein Lineararray projiziert wird. Der Sensor beinhaltet eine Flüssigkeit, deren Lage relativ zum Gerät zu einer Beeinflussung bzw. Ablenkung der Projektion der Figur auf dem Lineararray führt.

Neben den durch die Komplexität des Aufbaus mit abbildenden Optiken und ggf. Strahlteilern entstehenden Nachteilen sind Neigungsmesser dieser Bauarten aufgrund der erforderlichen Mindestlängen der Strahlgänge für beide Teilstrahlen nur begrenzt miniaturisierbar.

In der JP 09243359 wird ein einfacher Neigungssensor beschrieben, der ein versiegeltes, flüssigkeitgefülltes Gefäss aufweist. Eine Innenseite des Gefässes besitzt eine ausgewölbte Fläche, in der ein Quecksilbertropfen ruht. Das Gefäss und die darin befindliche Flüssigkeit werden von einer Lichtquelle durchleuchtet und die Lichtstrahlung von einem Detektor aus vier Photodioden als einfachem Quadrantensensor registriert. Aus der Lage der durch den Quecksilbertropfen hervorgerufenen Abschattung kann auf die Neigung des Sensors geschlossen werden. Durch diesen Aufbau kann keine Information jenseits der der durch den Schattenwurf erfolgten Abdunkelung der Photodioden genutzt werden. Insbesondere erfolgte keine Berücksichtigung der genauen Lage des Hell-Dunkel-Überganges auf dem Detektor.
DE 3639284 beschreibt einen optischen Neigungsmesser. Im Stand der Technik sind damit zwar hochpräzise und weitentwickelte Neigungsmesser bekannt, die jedoch aufgrund ihrer gattungsgemässen Komplexität und Auslegung nicht ohne grösseren Aufwand verkleinert werden können. Auf der anderen Seite existieren einfache Lösungen, die jedoch hinsichtlich der zur Bestimmung der Neigung zur Verfügung stehenden Informationen sehr eingeschränkt sind und daher eher eine grobe Abschätzung der Neigung erlauben.

Die Aufgaben der vorliegenden Erfindung bestehen in Bereitstellung eines optischen Neigungsmessers, der einen einfachen Aufbau bei einer gegenüber einfachen Abschattungsmessern verbesserten Messgenauigkeit aufweist.

Eine weitere Aufgabe besteht darin, einen Neigungsmesser bereitzustellen, der über ein Minimum mechanischer und optischer Teile verfügt und dadurch eine erhöhte Robustheit und Stossfestigkeit besitzt.

Eine weitere Aufgabe der vorliegenden Erfindung besteht darin, eine bauliche Integrierbarkeit in geodätische oder bautechnische Geräte zu gewährleisten. Dies betrifft insbesondere die Nutzung bereits vorhandener elektronischer Komponenten als Auswerteeinrichtungen.

Ausserdem besteht eine Aufgabe in der Möglichkeit zur Berücksichtigung von Alterungs- oder Umwelteffekten, wie z.B. thermischen Veränderungen.

Diese Aufgaben werden erfindungsgemäss durch die kennzeichnenden Merkmale der Ansprüche 1 bzw. 17 sowie durch die kennzeichnenden Merkmale der abhängigen Ansprüche gelöst.

Die vorliegende Erfindung betrifft einen optischen Neigungsmesser. Durch eine Strahlungsquelle wird Strahlung erzeugt, mit der ein Medium auf eine Kamera abgebildet wird. Das Medium wird von einem Aufnahmeelement aufgenommen. Dieses Aufnahmeelement kann beispielsweise aus einer Dose für eine Flüssigkeit oder einer Halterung für ein Pendel bestehen. Die Abbildung muss dabei nicht einer optisch exakten Abbildung entsprechen. Wesentlich ist die Durchleuchtung des Aufnahmeelementes mit wenigstens einem darin befindlichen oder von diesem gehaltenen ersten Medium. Das Abbild dieses Mediums oder eines Teiles dieses Mediums auf der Kamera kann gegebenenfalls durch Bildverarbeitung ausgewertet werden, so dass beispielsweise auch Abbildungsfehler, wie z.B. Verzerrungen, berücksichtigt und korrigiert werden können. Unter Abbildung soll somit in diesem Zusammenhang eine Durchstrahlung des Aufnahmeelementes verstanden werden, bei der ein von der Kamera auswertbares Abbild wenigsten des ersten Mediums oder eines Teiles des ersten Mediums entsteht.

Die verwendete Strahlung kann im sichtbaren aber auch im nichtsichtbaren Spektralbereich liegen und wird im Regelfall durch die technischen und physikalischen Parameter von Strahlungsquelle, Kamera und Medium bestimmt. Als Strahlungsquelle können neben herkömmlichen Lampen verschiedenen Typs auch lichtemittierende Dioden oder Laser, insbesondere Halbleiterlaser, verwendet werden. Je nach Realisierungsform wird mit dieser Strahlung das Medium durchleuchtet oder aber das Medium dient zur Abschattung der Strahlung. Die zu analysierenden Bestandteile des auf der Kamera abgebildeten Bildes oder zumindest von Teilen des Mediums können nun Hell-Dunkel-Übergänge einschliesslich der Schattenwurf des Mediums auf die Kamera beinhalten oder aber auch eine Grenzschicht zwischen zwei Medien. Je nach konkreter Ausgestaltung wird das Medium als ein erstes Medium in Abstimmung mit einem zweiten Medium so ausgewählt, dass beispielsweise als Effekt der Übergang als Hell-Dunkel-Grenze zu erkennen ist oder aber eine besonders ausgeprägte Grenzschicht entsteht. Grundsätzlich können auch beide Effekte gleichermassen genutzt werden. Bei der Wahl der jeweiligen Phase kann bei den Medien auch eine Anpassung der Transmissionsgrade bzw. der Transmissionskoeffizienten erfolgen.

Das zur Anzeige der Lage verwendete erste Medium kann ein Festkörper, eine Flüssigkeit oder ein Gas sein. Das zweite Medium kann ebenfalls eine dieser Phasen aufweisen, grundsätzlich kann hier aber auch ein evakuierter Bereich verwendet werden, sofern eine detektierbare Grenze des ersten Mediums erhalten bleibt. Einige nicht abschliessende Beispiele für verschiedene Ausführungsformen werden im folgenden dargestellt:
1. Ein Pendel als erstes Medium befindet sich in einem gasförmigen zweiten Medium. Während das gasförmige für die Strahlung durchlässig ist, ist das Pendel undurchlässig oder nur eingeschränkt transparent, so dass aus dem Bild des Pendels, das als Zone geringerer Beleuchtung auf der Kamera abgebildet wird, auf die Lage des Pendels und damit auf die Neigung geschlossen werden kann.
2. Zwei Halbkugeln aus Festkörpern unterschiedlicher Transmissionskoeffizienten und Dichten werden miteinander zu einer Kugel verbunden, die in einem Aufnahmeelement rotierbar gelagert ist.
3. Eine für die Strahlung undurchlässige Flüssigkeit als erstes Medium ist zusammen mit einem für die Strahlung durchlässigen und in der Flüssigkeit nicht löslichen Gas als zweitem Medium in einem als Aufnahmeelement dienenden Behälter eingeschlossen. Für die Auswertung wird der Hell-Dunkel-Übergang zwischen den beiden Medien verwendet, wobei eine Auswertung des Hell-Dunkel-Überganges auch bei zwei Medien mit nur schwach unterschiedlicher Durchlässigkeit der Strahlung möglich ist.
4. Ein für die Strahlung transparentes Gas und eine ebenso transparente Flüssigkeit sind in einem Behälter eingeschlossen, wobei eine Detektion der Grenzschicht erfolgt. Duch Kohäsion in der Flüssigkeit bildet sich im Übergangsbereich keine gerade sondern eine gekrümmte Linie. Anhand der Krümmung kann bestimmt werden, auf welcher Seite die Flüssigkeit liegt, so dass die Notwendigkeit der Einfärbung eines der beiden Medien, insbesondere aber der Flüssgkeit, entfallen kann.
5. Zwei nicht ineinander lösliche Flüssigkeiten mit unterschiedlichen Dichten, aber ähnlichen Transmissionskoeffizienten als erstes und zweites Medium werden in einem als Aufnahmeelement dienenden Behälter eingeschlossen. Für die Auswertung wird die Abbildung der Grenzschicht zwischen beiden Medien verwendet.

Beispiele für Flüssigkeiten stellen Quecksilber, Wasser oder Siliconöl dar. Für die Feststellung der Lage des ersten Mediums kann sowohl das Abbild der Grenzschicht als auch der Hell-Dunkel-Übergang oder eine Kombination aus beidem verwendet werden. Um eine Intensivierung der Grenzschicht zu erreichen, kann diese durch weitere Massnahmen leichter registrierbar gestaltet werden. Beispielweise können auf der Grenzschicht schwimmende Partikel verteilt werden, die eine verstärkte Absorption der Strahlung in diesem Bereich bewirken. Auch ist es möglich, auf der Grenzschicht eine schwimmerartigen Festkörper zu plazieren, der wiederum strahlungsdurchlässig oder -undurchlässig sein kann.

Das Bild des ersten Mediums bzw. des Übergangs zwischen beiden Medien wird auf die Kamera projiziert und dort aufgenommen und in elektronische Signale umgewandelt. Als eine geeignete Kamera kann beispielsweise eine CCD-Kamera oder eine CMOS-Kamera dienen. Eine solche Kamera ist beispielsweise als CMOS-Monochrome-Bildsensor ADCS 2120 der Firma Agilent erhältlich, die über ein Feld aus 640 x 480 Pixelpunkten verfügt.

Die von der Kamera erzeugten Signale werden von einer Auswerteeinheit analysiert und hinsichtlich der Neigung des Gerätes ausgewertet. Hierfür kann ein eigener Baustein bzw. eine eigene Komponente verwendet werden. Alternativ kann aber auch auf eventuell vorhandene Komponenten anderer Geräte zurückgegriffen werden. Beispielsweise kann die Funktion dieser Auswerteeinheit bei einem in einen Entfernungsmesser eingebauten Neigungsmesser auch von der für die Entfernungsmessung verwendeten Elektronik mitübernommen werden. Gleichermassen ist es möglich als Strahlungsquelle auch bereits für andere Zwecke verwendete Quellen zu verwenden. So könnte im Beispiel des Entfernungsmessers ein Teil des dort ggf. zur Distanzmessung verwendeten Laserlichtes ausgekoppelt und, eventuell nach einer Streuung oder Strahlaufweitung, zur Abbildung des Mediums verwendet werden.

Aus der relativen und absoluten Lage sowie der Form der Grenze zwischen den beiden Medien kann auf die Neigung des Gerätes geschlossen werden. Wird beispielsweise eine Kamera an einer Seitenfläche eines rechteckigen Behälters angebracht, der mit einer Flüssigkeit gefüllt ist, so kann aus dem Winkel der Flüssigkeitsoberfläche als Flüssigkeitshorizont zur Kamera die eine Neigungsrichtung (hier beispielhaft Längsneigung) bestimmt werden. Erfolgt eine ausschliessliche Neigung in der anderen Achse (hier beispielhaft Querneigung), so kann aus der Höhe des Flüssigkeitsspiegels die Neigung bestimmt werden. Kombinierte Neigungen in beiden Achsen führen zu einer Veränderung sowohl des Winkels als auch der Lage im Sinne einer Höhe des Flüssigkeitshorizontes.

Diese Abbildung und Auswertung ist sowohl mit einem reinen Hell-Dunkel-Übergang als auch mit einer Grenzschicht durchführbar. Darüber hinaus bietet eine Analyse der Grenzschicht noch weitere Vorteile. Betrachtet werden soll hier, ohne Beschränkung der Anwendbarkeit auf andere Ausgestaltungen, ein System mit einem flüssigen und einem gasförmigen Medium gemäss obigen Beispiels.
1. Bei einer Grenzschicht können im Gegensatz zur Analyse eines reinen Hell-Dunkel-Übergangs beiden Übergänge zu den Medien ausgewertet werden, d.h. es stehen zwei Kanten zur Verfügung.
2. Eine Veränderung der Querneigung des obigen Beispiels führt zu einer Vergrösserung oder Verringerung der Breite der des Abbildes der Grenzschicht. Die Breite des Abbildes kann damit auch als Information zur Bestimmung der Neigung herangezogen werden. Insbesondere kann eine Selbstkalibrierung des Systems erreicht werden, da - bei einer horizontalen Strahlführung im Aufnahmeelement - die Breite des Abbildes der Grenzschicht bei einer horizontalen Position des Gerätesminimal wird.
3. Beim Überschreiten einer bestimmten Neigungsgrenze, z.B. der Querneigung, kann unter Umständen von der Kamera eine doppelte Grenzschicht wahrgenommen werden, die von dem Kontakt der Flüssigkeit mit den Gefässwandungen definiert werden. Der Abstand zwischen diesen Grenzschichten kann analog zur Breite der Grenzschicht als ein Mass für die Neigung dienen und entsprechend ausgewertet werden.
4. Bei Verwendung einer benetzenden Flüssigkeit als erstes Medium wird diese durch Adhäsion an den Kontaktstellen des Behälters hochgezogen. Anhand der Krümmung des Flüssigkeitshorizontes kann festgestellt werden, auf welcher Seite des Behälters sich Flüssigkeit befindet. Auch in Querrichtung hat die Flüssigkeit eine Krümmung, so dass auch bei fehlender Querneigung stets zwei Linien bzw. Horizonte der Grenzschicht festzustellen sind. Die untere ist der Tiefstpunkt der Flüssigkeit, die oberen der Benetzungsrand der Flüssigkeit mit der Innenseite des Aufnahmeelementes. Nach einem Bewegen des Aufnahmeelementes und auch in einem eingeschwungenen Zustand ist die untere Linie wesentlich schärfer und schneller stabil als obere Benetzungslinien. In diesem Zusammenhang kann eine Detektion der Grenzschicht und damit der Lage des ersten Mediums nicht nur anhand des horizontierten sondern auch vermittels des gekrümmten Bereichs der Grenzschicht erfolgen.
5. Wird eine Grenzschicht in Winkelabhängigkeit deformierbar gestaltet, beispielsweise durch eine Luftblase in einer Dosen-Libelle mit einer speziell gekrümmt geformten Oberfläche, so kann aus der Lage und oder der Verformung der Luftblase ebenfalls auf die Neigung geschlossen werden. Eine solche Verformung kann beispielsweise erreicht werden, indem die Wölbung in Abweichung von der sphärischen Form, z.B. asphärisch oder tunnelförmig, gestaltet wird. Eine zwischen dieser Wölbung und der Flüssigkeit befindliche Luftblase würde dann mit zunehmender Neigung deformiert.

Durch die erfindungsgemässe Verwendung einer Kamera entsteht die Möglichkeit, die Eigenschaften und Merkmale des Bildes des ersten Mediums und hierin insbesondere den Verlauf und die Lage der Grenze oder Grenzschicht aufzulösen und auszuwerten. Dadurch kann mit dem erfindungsgemässen Verfahren eine Korrektur bzw. Eliminierung von Veränderungen aufgrund von Alterung oder Umwelteinflüssen vorgenommen werden. Veränderungen des Volumens der Medien können problemlos berücksichtigt werden, da bei der Messung der Längsneigung der Verlauf der Grenze bzw. Grenzschicht im Bild detektiert wird und der Winkel unabhängig von der absoluten Lage analysiert werden kann. Querneigungen können anhand der Breite des Abbildes der Grenzschicht bestimmt werden, wobei dieser Vorgang, wie bereits beschrieben, mit einer Selbstkalibrierung verbunden werden kann. Diese Selbstkalibrierung kann während der Nutzung des Neigungsmessers permanent im Hintergrund ablaufen, so dass eine grössere Menge von Datensätzen zu Neigung und Breite zur Verfügung stehen. Aus den Werten kann, gegebenenfalls unter Verwendung von statistischen oder Interpolationsverfahren, der minimale Wert berechnet und mit der horizontalen Position gleichgesetzt werden.

Voraussetzung für die Neigungsbestimmung anhand der Breite des Abbildes der Grenzschicht ist jedoch eine geeignete Gefässform des Aufnahmeelements, die keine füllhöhenbedingten Veränderungen des Abbildes der Grenzschicht bewirkt. Dieses Erfordernis ist aber leicht zu realisieren, beispielsweise durch ein Gefäss mit parallelen Seitenwänden. Insbesondere Verluste des Mediums oder dessen Dichteänderungen können auf diese Weise kompensiert werden.

Das erfindungsgemässe Verfahren bzw. eine erfindungsgemässe Vorrichtung werden nachfolgend anhand von in der Zeichnung schematisch dargestellten Ausführungsbeispielen rein beispielhaft näher beschrieben. Im einzelnen zeigen
- Fig.1: die schematische Darstellung einer ersten Ausführungsform des erfindungsgemässen Neigungsmessers in seitlicher Ansicht;
- Fig.2a-d: die schematische Darstellung der ersten Ausführungsform in Draufsicht sowie mit unterschiedlichen Medien;
- Fig.3a-c: die schematische Darstellung der ersten Ausführungsform des Neigungsmessers in waagerechter Position und der Oberfläche des Mediums mit Abbildung auf die Kamera in Draufsicht;
- Fig.4a-c: die schematische Darstellung der ersten Ausführungsform des Neigungsmessers in Längsneigung und der Oberfläche des Mediums mit Abbildung auf die Kamera in Draufsicht;
- Fig.5a-e: die schematische Darstellung der ersten Ausführungsform des Neigungsmessers in waagerechter Position in Seiten- und Draufsicht sowie der Oberfläche des Mediums mit Abbildung auf die Kamera in Seiten- und Draufsicht;
- Fig.6a-e: die schematische Darstellung der ersten Ausführungsform des Neigungsmessers in Querneigung und in Seiten- und Draufsicht sowie der Oberfläche des Mediums mit Abbildung auf die Kamera in Seiten- und Draufsicht;
- Fig.7a-d: die schematische Darstellung einer zweiten Ausführungsform des Neigungsmessers in waagerechter Position und in Seiten- und Draufsicht sowie der Oberfläche des Mediums mit Abbildung auf die Kamera in Draufsicht; und
- Fig.8a-e: die schematische Darstellung einer zweiten Ausführungsform des Neigungsmessers in Querneigung und in Seitensicht sowie der Oberfläche des Mediums mit Abbildung auf die Kamera in Draufsicht für zwei unterschiedliche geformte Oberflächen des Aufnahmeelementes.

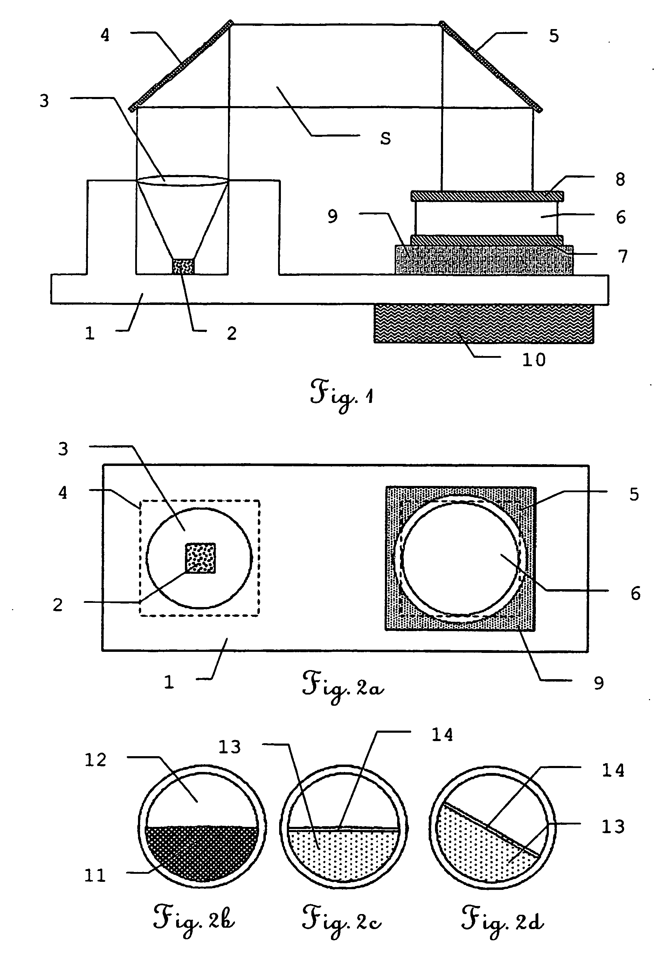

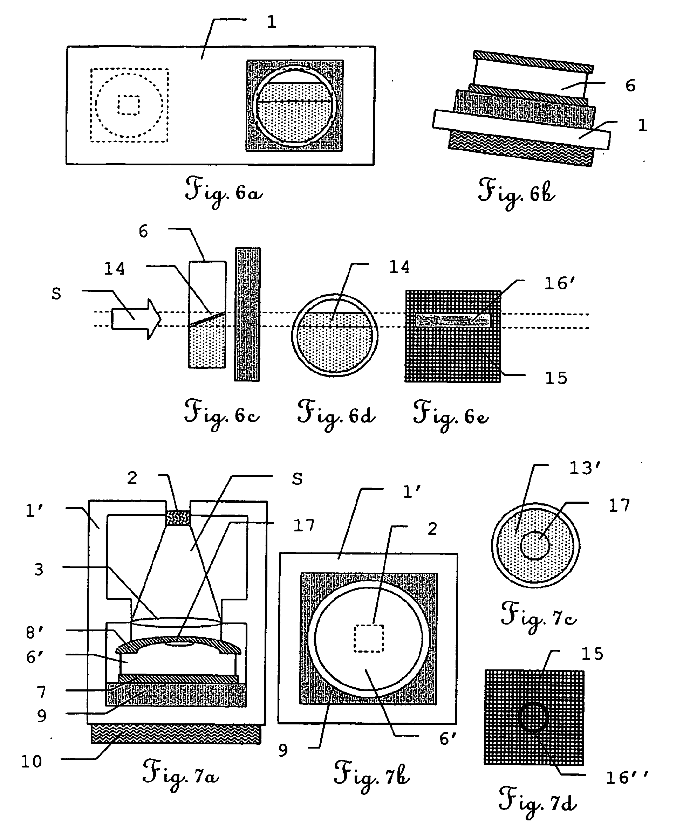

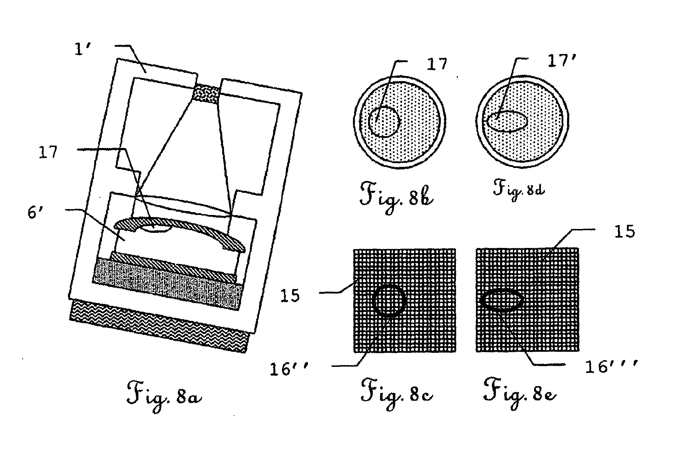

In Fig.1 wird eine erste Ausführungsform des erfindungsgemässen optischen Neigungsmesser mit der Integration aller Komponenten auf einer Platte als gemeinsamer Basis 1 schematisch in Seitenansicht dargestellt. Durch eine Strahlungsquelle 2 wird sichtbare oder nicht sichtbare Strahlung S senkrecht zur Basis 1 emittiert. Die Strahlung S wird durch eine Linse 3 kollimiert und über ein erstes Umlenkelement 4 und ein zweites Umlenkelement 5 wieder so umgelenkt, dass sie senkrecht zur Basis 1 einfällt. Im Bereich der einfallenden Strahlung ist auf der Basis 1 ein Aufnahmeelement 6 mit einer zur Basis orientierten ersten Oberfläche 7 und einer zum zweiten Umlenkelement orientierten zweiten Oberfläche 8 angebracht. Zwischen Basis 1 und dem Aufnahmeelement bzw. dessen erster Oberfläche 7 befindet sich eine Kamera 9, die mit einer Auswerteeinheit 10 verbunden ist. Aus Gründen der Platzersparnis sind die zur Strahlerzeugung, zum Strahlgang und zum Strahlungsempfang gehörigen Komponenten auf der einen Seite der Basis 1, die Auswerteeinheit 10 aber auf der entgegengesetzten Seite der Basis 1 angebracht, grundsätzlich kann jedoch auch eine andere Anordnung der Komponenten oder der Auswerteeinheit 10 gewählt werden. Diese Anordnung bietet somit den Vorteil der Integration aller elektronischen Bauteile auf einer gemeinsamen Basis 1, die beispielsweise auch als Leiterplatte ausgebildet sein kann. Hierdurch kann ein einfacher und mechanisch unempfindlicher Aufbau realisiert werden. Die Umlenkelemente 4 und 5 können als reflektierende Bauelemente, z.B. als Prismen oder Spiegel ausgebildet sein. Grundsätzlich kann eine geeignete Umlenkung jedoch auch ohne spezielle Bauelemente erfolgen, z.B. durch eine Reflektion an der Innenseite eines Gehäuses, wobei diese Reflektion auch streuenden bzw. diffusen Charakter besitzen kann. Auch kann auf eine Umlenkung verzichtet werden, wenn gewährleistet ist, dass zumindest Teilbereiche des Aufnahmeelementes 6 durch Strahlung S der Strahlungsquelle 2 bzw. Kamera 9 ausgeleuchtet werden. Beispielsweise kann auch durch eine gekrümmte oder gewinkelte Basis 1 eine derart geeignete Orientierung von Strahlungsquelle 2 und Aufnahmeelement 6 bzw. Kamera 9 bewirkt werden. Grundsätzlich kann bei Verzicht der Montage auf eine gemeinsame Basis 1 jedoch auch eine direkte Montage der Komponenten aufeinander erfolgen, wie dies in einer zweiten erfindungsgemässen Ausführungsform in Fig.7 und Fig.8 dargestellt wird.

Fig.2a zeigt diese erste Ausführungsform des Neigungsmessers in Draufsicht. Die von der Strahlungsquelle 2 emittierte Strahlung wird durch eine Linse 3 kollimiert und über ein erstes Umlenkelement 4 und ein zweites Umlenkelement 5 auf das Aufnahmeelement 6 geführt. Dieses Aufnahmeelement ist auf einer Kamera 9 aufgebracht. In dieser Ausführungsform sind die Strahlungsquelle 2 und die Kamera 9 auf einer im wesentlichen ebenen Grundplatte als Basis 1 befestigt. Im Aufnahmeelement 6 befindet sich wenigstens ein erstes Medium. Mögliche Ausgestaltungen werden in Fig.2b bis Fig.2d dargestellt.

In Fig.2b ist die teilweise Befüllung des Aufnahmeelementes mit einem strahlungsundurchlässigen ersten Medium 11 als eine mögliche Ausführungsform dargestellt. Der restliche Bereich des Aufnahmeelementes kann mit einem zweiten Medium 12 gefüllt sein, wobei dieses zweite Medium aber auch durch ein Vakuum ersetzt werden kann. In dieser Ausführungsform mit einem strahlungsundurchlässigem ersten Medium 11 wird das zweite Medium 12 so gewählt, dass es eine zumindest teilweise Durchlässigkeit für die Strahlung aufweist. Durch diese Ausgestaltung entsteht ein hell-dunkel-Kontrast zwischen den beiden Medien, der durch die Kamera detektiert werden kann.

In Fig.2c ist eine weitere Ausführungsform der Befüllung des Aufnahmeelementes mit einem strahlungsdurchlässigen ersten Medium 13 dargestellt. Der restliche Raum des Aufnahmeelementes kann wiederum durch ein zweites Medium ausgefüllt werden, das in diesem Beispiel ebenfalls strahlungsdurchlässig ist. Zwischen den Medien bildet sich eine Grenzschicht 14 aus, die auf die Kamera abgebildet wird und von dieser aufgelöst werden kann. Diese Grenzschicht 14 kann beispielsweise durch Aufbringen von kleinen Partikeln, wie z.B. einem Pulver, oder auch massiveren Komponenten, wie z.B. einem Schwimmer, in ihrer Detektierbarkeit verstärkt werden.

Fig.2d zeigt die Veränderung der Lage der Medien im Aufnahmeelement bei einer Neigung des Neigungsmessers. Dargestellt wird die Veränderung mit Bezug zur Kamera, die bezüglich der Basis fixiert ist. Die schematisch dargestellte Lage entspricht einer Drehung des in Fig.2a abgebildeten Neigungsmessers entgegen dem Uhrzeigersinn und wird als Längsneigung bezeichnet. Während die in Fig.2b und Fig.2c dargestellten Lagen der Medien einer horizontalen Position des Neigungsmessers entsprechen, stellt Fig.2d die von der Kamera erfassbare Lage bei der beschriebenen Drehung des Neigungsmessers dar. Durch die Neigung hat sich das strahlungsdurchlässige erste Medium 13 innerhalb des Aufnahmeelementes verschoben. Die veränderte Lage kann durch die Ausrichtung der Grenzschicht 14 erkannt und bestimmt werden.

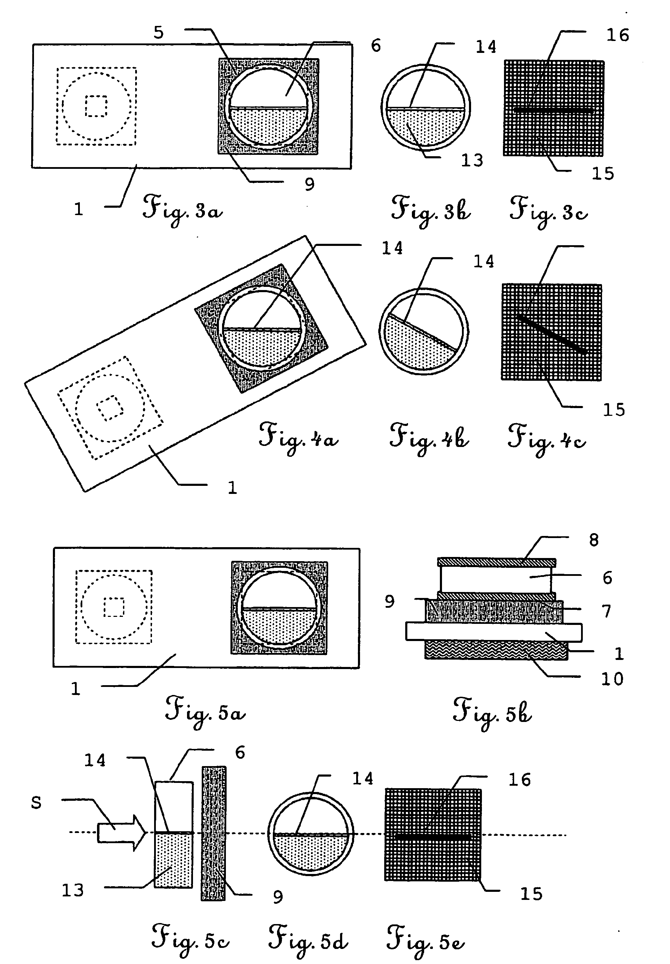

In Fig.3a-c werden in einer Zusammenschau nochmals die Lage und die Erkennung der Grenzschicht bei waagrechter, ungeneigter Position des Neigungsmessers verdeutlicht. In Fig.3a wird über das zweite Umlenkelement 5 Strahlung auf das Aufnahmeelement 6 geführt und nach dem Durchgang durch das Volumen dieses Aufnahmeelementes auf die Kamera 9 abgebildet. Das von der Kamera wahrnehmbare Abbild der Medien im Aufnahmeelement wird in Fig.3b gezeigt. Hier ist das strahlungsdurchlässige erste Medium 13 mit seiner Grenzschicht noch horizontal zur Kamera orientiert. Fig.3c zeigt schematisch das von der Kamera wahrgenommene Bild. Auf einer Detektorfläche 15 aus Zeilen und Spalten von Bildpunkten bzw. Pixeln wird das Abbild der Grenzschicht 16 projiziert. Dieses Abbild kann durch die Abschattung der einzelnen Bildpunkte in Signale umgewandelt werden, aus denen die Lage bzw. Orientierung der Grenzschicht abgeleitet wird. Gegenüber der grundsätzlich ebenfalls realisierbaren erfindungsgemässen Erkennung eines reinen hell-dunkel-Übergangs, z.B. wie in Fig.2b dargestellt, bietet die Detektion einer Grenzschicht zwischen zwei durchstrahlbare Medien die Möglichkeit, im Abbild der Grenzschicht 16 zwei Kanten zur Lagebestimmung auszuwerten. Neben einer Auswertung einer reinen Abschattung von Bildpunkten kann auch eine Berücksichtigung weiterer Eigenschaften erfolgen. So kann durch die Erkennung von Grauwerten oder durch eine Farbkamera eine genauere Auflösung der Lage der Grenzschicht erzielt werden. Auch können ergänzend weitere Merkmale wie z.B. farbliche Veränderungen aufgrund von Brechung oder Streuung mitberücksichtigt werden.

Die Veränderung der Lage der Grenzschicht bei einer ausschliesslichen Längsneigung des Neigungsmessers bzw. der Basis 1 ist in Fig. 4a-c schematisch dargestellt. Fig.4a zeigt die Drehung des Neigungsmessers gegenüber der Senkrechten als Längsneigung. Die Grenzschicht 14 bleibt in ihrer absoluten Lage unverändert und damit gegenüber dem Vektor der Schwerkraft horizontiert. Wie in Fig.4b gezeigt verändert sich jedoch die relative Lage der Grenzschicht 14 als Lage gegenüber der Basis 1 bzw. gegenüber der Kamera. Nun ist die Grenzschicht 14 geneigt. Das entsprechende Abbild der Grenzschicht 16 auf der Detektorfläche 15 ist schematisch in Fig. 4c dargestellt, wobei dieses Abbild nun eine Neigung gegenüber der Kamera bzw. der Detektorfläche besitzt.

In Fig.5a-e werden die Verhältnisse bei einem waagrecht orientierten erfindungsgemässen Neigungsmesser in seitlicher Ansicht dargestellt. Fig.5a zeigt den Neigungsmesser in Draufsicht, wohingegen in Fig.5b eine seitliche Sicht erfolgt, die in Fig.5a einem Blick von rechts entspricht. In Fig.5b ist in dieser Seitenansicht der Aufbau des Neigungsmessers schematisch dargestellt. Auf der Basis 1 ist eine Kamera 9 angebracht, die mittel- oder unmittelbar ein Aufnahmeelement 6 mit einer ersten Oberfläche 7 und einer zweiten Oberfläche 8 trägt. Auf der anderen Seite der Basis 1 ist die Auswerteeinheit 10 angebracht. Fig. 5c zeigt eine abstrahierte Darstellung dieser Seitenansicht der Fig.5b nach einer Drehung um 90° nach links. Von links fällt Strahlung S auf das Aufnahmeelement 6 mit dem darin befindlichen strahlungsdurchlässigen ersten Medium 13. Nach Durchqueren des Aufnahmeelementes fällt diese Strahlung auf die Kamera 9 und bildet so die Grenzschicht 14 auf die Detektorfläche der Kamera 9 ab. In Fig.5d ist die Lage der Grenzschicht 14 relativ zur Kamera dargestellt. Fig.5e zeigt das zugehörige Abbild der Grenzschicht 16 auf der Detektorfläche 15.

In Fig.6a-e erfolgt die Darstellung für einen geneigten Neigungsmesser, wobei die Drehung um eine zur bisherigen Drehung senkrecht orientierten Achse erfolgt. Eine aus einer solchen Drehung resultierende Lage wird als Querneigung bezeichnet. Fig.6a zeigt den Neigungsmesser in Draufsicht, Fig.6b zeigt den Neigungsmesser in Seitenansicht. In Fig.6c ist erkennbar, dass die hier exemplarisch als Flüssigkeitsspiegel ausgebildete Grenzschicht 14 im Aufnahmeelement 6 nun gegenüber der Einfallsachse der Strahlung S geneigt ist. Damit erscheint, wie in Fig.6d dargestellt, aus Blickrichtung der Kamera die Grenzschicht 14 verbreitert. Wie in Fig.6e gezeigt erscheint das Abbild der Grenzschicht 16' auf der Detektorfläche nun ebenfalls verbreitert, so dass eine grössere Anzahl von Bildpunkten betroffen ist. Die Breite des Abbildes der Grenzschicht 16' und die Querneigung des Neigungsmesser sind miteinander korreliert, so dass aus dieser Breite auf die Neigung geschlossen werden kann.

Die Fig.7a-d zeigen eine zweite Ausführungsform eines erfindungsgemässen Neigungsmessers, die beispielsweise in Lotstöcken oder ähnlichen geodätischen Geräten verwendet werden kann.

In Fig.7a ist der Aufbau eines solchen Neigungsmessers schematisch dargestellt, wobei sich der Neigungsmesser in waagerechter Position befindet. Die Basis 1' ist im wesentlichen u-förmig ausgebildet und nimmt zwischen den beiden Schenkeln eine Strahlungsquelle 2 auf. Die Strahlungsquelle emittiert Strahlung S, die von einer Linse 3 kollimiert wird. Die kollimierte Strahlung S wird danach auf das Aufnahmeelement 6' geführt, das mittelbar oder unmittelbar auf einer Kamera 9 angebracht ist. Auf der der Kamera 9 entgegengesetzten Seite der Basis 1' ist eine Auswerteeinheit angebracht. Das Aufnahmeelement 6 weist zwei Oberflächen auf, von denen die erste Oberfläche 7 im wesentlichen plan ausgebildet ist, wohingegen die zweite Oberfläche 8' eine Wölbung besitzt. Das Aufnahmeelement ist mit einem liquiden Medium befüllt, in dem sich eine Luftblase als zweites Medium befindet, wobei auch andere Gase oder gegebenenfalls eine weitere Flüssigkeit die Funktion der Luftblase ausüben können. Alternativ kann jedoch auch eine andere Kombination von Medien eine erfindungsgemässe Eignung besitzen. Z.B. kann anstelle der Luftblase ein Quecksilbertropfen in einem Öl verwendet werden, so dass dieser Tropfen im Gegensatz zur Blase nicht an der Oberfläche schwimmt sondern am Boden des Gefässes verbleibt. Die jeweilige konkrete Ausgestaltung wird unter anderem von baulichen Gegebenheiten abhängen. So würde beispielsweise die Verwendung eines Quecksilbertropfens die Orientierung der zweiten Oberfläche 8' mit der Wölbung in Richtung Erdboden erfordern.

Fig.7b zeigt eine Draufsicht auf den Neigungsmesser, bei dem die Strahlungsquelle 2 unter Weglassung ihrer Halterung nur angedeutet ist. Die Strahlung dieser Strahlungsquelle durchleuchtet das Aufnahmeelement 6' und fällt auf die darunterliegende Kamera 9, die auf der Basis 1' montiert ist.

In Fig.7c ist der Blick in das Aufnahmeelement aus Richtung der Kamera dargestellt. In einem strahlungsdurchlässigem ersten Medium 13' ist eine Luftblase 17 anhand ihrer Grenzschicht zu erkennen. Alternativ oder ergänzend können neben der Identifikation der Grenzschicht auch weitere Merkmale der Luftblase 17, wie z.B. eine Veränderung des Transmissionsgrades aufgrund des im strahlungsdurchlässigen ersten Medium 13' zurückgelegten Weges oder eine Veränderung des Transmissionsgrades aufgrund eines unterschiedlichen Transmissionskoeffizienten der Luftblase, verwendet werden. Das Abbild der Grenzschicht 16" der Luftblase auf der Detektorfläche 15 der Kamera ist in Fig.7d schematisch dargestellt.

In Fig.8a-e sind die Verhältnisse für eine Querneigung des Neigungsmessers schematisch dargestellt. Fig.8a zeigt eine Verkippung der Basis 1' nach rechts, die somit einer Querneigung entspricht. Die Luftblase 17 hat sich nun innerhalb des Aufnahmeelementes 6' nach links verlagert. Diese Verlagerung wird auch in Fig.8b und Fig.8c gezeigt. Fig.8b entspricht einem Blick aus Richtung Kamera auf das Aufnahmeelement. Die Luftblase ist nun bezüglich der Kamera nach links verschoben. Das zugehörige Abbild der Grenzschicht 16" auf der Detektorfläche 15 ist in Fig.8c gezeigt.

Wird die zweite Oberfläche des Aufnahmeelementes in ihrer Wölbung so ausgeformt, dass die Luftblase in Abhängigkeit vom Neigungsgrad deformiert wird, kann aus der Form bzw. der Formveränderung des Abbildes auf die Neigung geschlossen werden. Eine geeignete Form könnte beispielsweise eine asphärische Wölbung mit einer gegenüber einer Sphäre stärker oder geringer zunehmenden Krümmung darstellen. In Fig.8d und Fig.8e ist beispielhaft eine asphärische Form mit nach aussen abnehmendem Krümmungsradius dargestellt. Mit zunehmender Neigung wird die Luftblase somit eine zunehmend länglichere Form annehmen. In Fig.8d wird ein Blick aus Richtung Kamera auf das Aufnahmeelement dargestellt. Die Luftblase ist nun bezüglich der Kamera nach links verschoben und länglich ausgeformt. Das zugehörige Abbild der Grenzschicht 16" ' auf der Detektorfläche 15 ist in Fig.8e gezeigt.

Die dargestellten Ausführungsformen stellen nur Beispiele für erfindungsgemässe Realisierungen dar und sind daher nicht abschliessend und einschränkend zu verstehen. Darüber hinaus kann der Fachmann weitere erfindungsgemässe Ausführungsformen, z.B. unter Verwendung anderer Strahlgänge oder Umlenkelemente, wie beispielsweise Prismen, streuender Flächen oder Lichtleitern, oder alternativer Formen des Aufnahmeelementes und der darin befindlichen Medien ableiten. Insbesondere ist es möglich, statt fluider Medien auch pendelartige Festkörper oder Kombinationen von Festkörpern und fluiden Medien zu verwenden.

In den Figuren sind die Bildpunkte der Detektorfläche und insbesondere deren Zahl rein schematisch dargestellt. In den realen Ausführungsformen ist die Zahl der Bildpunkte verfügbarer Kameras meist höher, so dass höhere Auflösungen der Lage bzw. Winkel erzielbar sind.

## Patentansprüche

1. Optischer Neigungsmesser mit
• einer Strahlungsquelle (2) zur Erzeugung von Strahlung (S);
• mindestens einem ersten Medium 11, 13), dessen Lage neigungsabhängig ist;
• einem Aufnahmeelement (6,6') für das erste Medium (11,13);
• einer Kamera (9), vorzugsweise einer CMOS- oder CCD-Mikro-Kamera, zum Aufnehmen und Umwandeln einer Abbildung (16,16', 16",16"') in Signalen und
• einer Auswerteeinheit (10) zur Bestimmung der Neigung;
wobei Strahlungsquelle (2) und Kamera (9) so angeordnet sind, das durch die Strahlung ein Bild des Verlaufs einer Grenzschicht (14) zumindest eines Teiles des ersten Mediums (11,13) mittelbar oder unmittelbar auf die Kamera (9) abgebildet wird,
**dadurch gekennzeichnet, daß**
Kamera (9) und Auswerteeinheit (10) so ausgebildet sind, dass das Bild durch die Kamera (9) aufgenommen und der Verlauf der Grenzschicht (14) aufgelöst und der Verlauf der Grenzschicht (14) durch die Auswerteeinheit (10) zur Bestimmung der Neigung ausgewertet wird.

2. Optischer Neigungsmesser nach Anspruch 1,
**dadurch gekennzeichnet, daß**
ein Bild des Verlaufs zumindest eines Teiles einer im wesentlichen ebenen Grenzschicht (14) des ersten Mediums (11,13) mittelbar oder unmittelbar auf die Kamera (9) abgebildet wird.

3. Optischer Neigungsmesser nach Anspruch 2,
**dadurch gekennzeichnet, daß**
das erste Medium (11,13) eine Flüssigkeit, und die Grenzschicht (14) ein Flüssigkeitshorizont ist.

4. Optischer Neigungsmesser nach Anspruch 3,
**dadurch gekennzeichnet, daß**
das Aufnahmeelement (6,6') als, vorzugsweise halb gefüllte, zylindrische Dose ausgestaltet ist.

5. Optischer Neigungsmesser nach einem der Ansprüche 2 bis 4,
**dadurch gekennzeichnet, daß**
der Neigungsmesser als ein zweites Medium (12)
• ein Gas,
• eine Flüssigkeit oder
• einen Festkörper, insbesondere in Form eines Schwimmers, aufweist, dessen Kontaktfläche zum ersten Medium (11,13) die Grenzschicht (14) definiert.

6. Optischer Neigungsmesser nach Anspruch 5,
**dadurch gekennzeichnet, daß**
das erste Medium (11,13) und das zweite Medium (12) für die Strahlung (5) unterschiedliche Transmissionsgrade, vorzugsweise unterschiedliche Transmissionskoeffizienten, aufweise, insbesondere daß eines der beiden Medien für die Strahlung (S) undurchlässig ist.

7. Optischer Neigungsmesser nach Anspruch 1,
**dadurch gekennzeichnet, daß**
das erste Medium (11,13) ein pendelartiger Festkörper ist.

8. Optischer Neigungsmesser nach einem der vorangehenden Ansprüche, **dadurch** gekennezeichnet, daß
die Strahlungsquelle (2) einen Halbleiterlaser oder eine LED. aufweist.

9. Optischer Neigungsmesser nach einem der vorangehenden Ansprüche,
**dadurch gekennzeichnet, daß**
Strahlungsquelle (2) und Kamera (9) so angeordnet sind, daß die Strahlung (S) im Bereich des ersten Mediums (11,13) im wesentlichen parallel zu einer Oberfläche des ersten Mediums (11,13) geführt wird.

10. Optischer Neigungsmesser nach einem der vorangehenden Anspruch,
**dadurch gekennzeichnet, daß**
das Aufnahmeelement (6,6') mittelbar oder unmittelbar auf der Kamera (9) angebracht ist.

11. Optischer Neigungsmesser nach einem der vorangehenden Anspruch,
**dadurch gekennzeichnet, daß**
das Aufnahmeelement (6,6')
• eine erste ebene, transparente Oberfläche (7) und
• eine zweite transparente Oberfläche (8)
aufweist, die im wesentlichen parallel zueinander orientiert sind,
wobei die zweite Oberfläche (8) eben oder gewölbt ausgeformt ist.

12. Optischer Neigungsmesser nach Anspruch 11,
**dadurch gekennzeichnet, daß**
die Kamera (9) eine zweidimensionale Detektorfläche (15) aufweist, die parallel zu der ersten Oberfläche (7) und/oder der zweiten Oberfläche (8) des Aufnahmeelements (6,6') ausgerichtet ist.

13. Optischer Neigungsmesser nach einem der vorangehenden Ansprüche,
**dadurch gekennzeichnet, daß**
Strahlungsquelle (2) und Kamera (9) auf einer gemeinsamen Basis (1,1'), vorzugsweise einer Leiterplatte, angebracht sind.

14. Optischer Neigungsmesser nach Anspruch 13,
**dadurch gekennzeichnet, daß**
Strahlungsquelle (2) und Kamera (9) so angeordnet sind, dass die erzeugte Strahlung (S) senkrecht zur Oberfläche der Basis (1,1') emittiert wird und die Empfangsrichtung der Kamera (9) senkrecht zur Oberfläche der Basis (1,1') orientiert ist.

15. Optischer Neigungsmesser nach Anspruch 13 oder 14,
**dadurch gekennzeichnet, daß**
ein Strahlgang von der Strahlungsquelle (2) zur Kamera (9) wenigstens ein Umlenkelement (4,5) aufweist.

16. Geodätisches Gerät, insbesondere Entfernungsmesser oder Lotstock, mit einem Neigungsmesser nach einem der Ansprüche 1 bis 15.

17. Verfahren zur Messung der Neigung eines Gerätes, insbesondere eines geodätischen Gerätes, mit
• einer Strahlungsquelle (2) zur Erzeugung von Strahlung (S);
• mindestens einem ersten Medium (11,13) dessen Lage neigungsabhanglg ist;
• einem Aufnahmeelement (6,6') für das erste Medium (11,13);
• einer Kamera (9) zum Aufnehmen von Bildern; und
• einer Auswerteeinheit (10) zur Bestimmung der Neigung des Gerätes;
mit den Schritten
- Erzeugen eines Bildes auf der Kamera (9) mittels von der Strahlungsquelle erzeugter Strahlung (S), wobei das Bild den Verlauf einer Grenzschicht zumindest eines Teils des ersten Mediums (11,13) beinhaltet,
- Aufnehmen und Umwandeln des Bildes in Signale durch die Kamera (9).
- Bestimmung der Neigung des Gerätes aus den Signalen durch die Auswerteeinheit (10)
**dadurch gekennzeichnet, dass**
der Verlauf der Grenzschicht (14) aufgelöst und der Verlauf der Grenzschicht (14) zur Bestimmung der Neigung ausgewertet wird.

18. Verfahren nach Anspruch 17,
**dadurch gekennzeichnet, daß**
die Neigung des Gerätes aus Orientierung und Form der Grenzschicht (14) bestimmt wird.

19. verfahren nach einem der Ansprüche 17 oder 18,
**dadurch gekennzeichnet, daß**
beim Erzeugen eines Bildes die Strahlung (S) im wesentlichen parallel zu einer Oberfläche des ersten Mediums (11,13) beführt wird.

20. Verfahren nach einem der Ansprüche 17 bis 19,
**dadurch gekennzeichnet, daß**
die Bestimmung der Neigung unter Berücksichtigung von
• Winkel des ersten Mediums (11,13) im Bild und
• absoluter Lage des ersten Mediums (11,13) im Bild erfolgt.

21. Verfahren nach einem der Ansprüche 17 bis 20,
**dadurch gekennzeichnet, daß**
beim Erreichen oder überschreiten eines vorbestimmbaren Neigungswertes ein Signal ausgegeben wird.

22. Verfahren nach einem der Ansprüche 17 bis 21,
**dadurch gekennzeichnet, daß**
bei der Besetzung der Neigung Fehler aufgrund von Temperatureffekten und/oder Substanzverlusten mindestens des ersten Mediums (11,13) berücksichtigt, insbesondere eliminiert, werden.

23. Verfahren nach einem der Ansprüche 17 bis 22,
**dadurch gekennzeichnet, daß**
beim Erzeugen eines Bildes eine im wesentlichen ebene Grenzschicht (14) des ersten Mediums (11,13) abgebildet wird.

24. Verfahren nach Anspruch 23,
**dadurch gekennzeichnet, daß**
bei der Bestimmung der Neigung des Gerätes die Ausdehnung, Form und/oder Lage der Grenzschicht (14) berücksichtigt wird.

## Claims

1. Optical inclinometer comprising
• a radiation source (2) for producing radiation (S) ;
• at least one first medium (11, 13) whose position is inclination-dependent;
• a holding element (6, 6') for the first medium (11, 13);
• a camera (9), preferably a CMOS or CCD microcamera, for recording and converting an image (16, 16', 16", 16"') into signals;
• an evaluation unit (10) for determining the inclination;
radiation source (2) and camera (9) being arranged so that an image of the course of a boundary layer (14) at least of a part of the first medium (11, 13) is projected indirectly or directly onto the camera (9) by the radiation,
**characterized in that** camera (9) and evaluation unit (10) are formed in such a way that the image is recorded by the camera (9) and the course of the boundary layer (14) is resolved and the course of the boundary layer (14) is evaluated by the evaluation unit (10) for determining the inclination.

2. Optical inclinometer according to Claim 1,
**characterized in that** an image of the course of at least a part of a substantially flat boundary layer (14) of the first medium (11, 13) is projected indirectly or directly onto the camera (9).

3. Optical inclinometer according to Claim 2,
**characterized in that** the first medium (11, 13) is a liquid and the boundary layer (14) is a liquid level.

4. Optical inclinometer according to Claim 3,
**characterized in that** the holding element (6, 6') is designed as a preferably half-full cylindrical can.

5. Optical inclinometer according to any of Claims 2 to 4, **characterized in that** the inclinometer has, as a second medium (12),
• a gas,
• a liquid or
• a solid, in particular in the form of a float, whose contact surface with the first medium (11, 13) defines the boundary layer (14).

6. Optical inclinometer according to Claim 5,
**characterized in that** the first medium (11, 13) and the second medium (12) have different degrees of transmission, preferably different transmission coefficients, for the radiation (S), in particular that one of the two media is impermeable for the radiation (S).

7. Optical inclinometer according to Claim 1,
**characterized in that** the first medium (11, 13) is a pendulum-like solid.

8. Optical inclinometer according to any of the preceding claims, **characterized in that** the radiation source (2) has a semiconductor laser or an LED.

9. Optical inclinometer according to any of the preceding claims, **characterized in that** radiation source (2) and camera (9) are arranged so that the radiation (S) in the region of the first medium (11, 13) is passed substantially parallel to a surface of the first medium (11, 13).

10. Optical inclinometer according to any of the preceding claims, **characterized in that** the holding element (6, 6') is mounted indirectly or directly on the camera (9).

11. Optical inclinometer according to any of the preceding claims, **characterized in that** the holding element (6, 6') has
• a first flat, transparent surface (7) and
• a second transparent surface (8),
which are oriented substantially parallel to one another, the second surface (8) being flat or curved.

12. Optical inclinometer according to Claim 11,
**characterized in that** the camera (9) has a two-dimensional detector surface (15) which is oriented parallel to the first surface (7) and/or the second surface (8) of the holding element (6, 6').

13. Optical inclinometer according to any of the preceding claims, **characterized in that** radiation source (2) and camera (9) are mounted on a common base (1, 1'), preferably a circuit board.

14. Optical inclinometer according to Claim 13,
**characterized in that** radiation source (2) and camera (9) are arranged so that the radiation (S) produced is emitted perpendicularly to the surface of the base (1, 1') and the receiving direction of the camera is oriented perpendicularly to the surface of the base (1, 1').

15. Optical inclinometer according to Claim 13 or 14,
**characterized in that** a beam path from the radiation source (2) to the camera (9) has at least one deflection element (4, 5).

16. Geodetic device, in particular rangefinder or surveyor's pole, having an inclinometer according to any of Claims 1 to 15.

17. Method for measuring the inclination of a device, in particular of a geodetic device, comprising
• a radiation source (2) for producing radiation (S);
• at least one first medium (11, 13) whose position is inclination-dependent;
• a holding element (6, 6') for the first medium (11, 13);
• a camera (9) for recording images; and
• an evaluation unit (10) for determining the inclination of the device;
comprising the steps
- production of an image on the camera (9) by means of radiation (S) produced by the radiation source, the image including the course of a boundary layer of at least a part of the first medium (11, 13),
- recording and conversion of the image into signals by the camera (9),
- determination of the inclination of the device from the signals by the evaluation unit (10),
- **characterized in that** the course of the boundary layer (14) is resolved and the course of the boundary layer (14) is evaluated for determining the inclination.

18. Method according to Claim 17, **characterized in that** the inclination of the device is determined from orientation and shape of the boundary layer (14).

19. Method according to either of Claims 17 and 18,
**characterized in that**, on production of an image, the radiation (S) is passed substantially parallel to a surface of the first medium (11, 13).

20. Method according to any of Claims 17 to 19,
**characterized in that** the determination of the inclination is effected taking into account
• angle of the first medium (11, 13) in the image and
• absolute position of the first medium (11, 13) in the image.

21. Method according to any of Claims 17 to 20,
**characterized in that** a signal is output on reaching or exceeding a predeterminable inclination value.

22. Method according to any of Claims 17 to 21,
**characterized in that** errors owing to temperature effects and/or substance losses of at least the first medium (11, 13) are taken into account, in particular eliminated, in the determination of the inclination.

23. Method according to any of Claims 17 to 22,
**characterized in that** a substantially flat boundary layer (14) of the first medium (11, 13) is projected when producing an image.

24. Method according to Claim 23, **characterized in that** the extension, course and/or position of the boundary layer (14) are taken into account in the determination of the inclination of the device.

## Revendications

1. Inclinomètre optique, comprenant :
• une source de rayonnement (2), pour produire un rayonnement (S) ;
• au moins un premier milieu (11, 13), dont la position dépend de l'inclinaison ;
• un élément de confinement (6, 6') pour le premier milieu (11, 13) ;
• une caméra (9), de préférence une microcaméra CMOS ou à éléments CCD, pour enregistrer et convertir une représentation (16, 16', 16", 16"') en des signaux ; et
• une unité d'évaluation (10), pour déterminer l'inclinaison ;
la source de rayonnement (2) et la caméra (9) étant disposées de manière que, du fait du rayonnement, une image de l'allure d'une couche limite (14) au moins d'une partie du premier milieu (11, 13) soit imagée, indirectement ou directement, sur la caméra (9),
**caractérisé en ce que**
la caméra (9) et l'unité d'évaluation (10) sont réalisées de manière que l'image soit enregistrée par la caméra (9) et que l'allure de la couche limite (14) soit décomposée suivant une certaine résolution, et que l'allure de la couche limite (14) soit évaluée par l'unité d'évaluation (10) de manière à déterminer l'inclinaison.

2. Inclinomètre optique selon la revendication 1,
**caractérisé en ce qu'**
une image de l'allure d'au moins d'une partie d'une couche limite (14) sensiblement plane du premier milieu (11, 13) est imagée, indirectement ou directement, sur la caméra (9).

3. Inclinomètre optique selon la revendication 2,
**caractérisé en ce que**
le premier milieu (11, 13) est un liquide et la couche limite (14) est un horizon de liquide.

4. Inclinomètre optique selon la revendication 3,
**caractérisé en ce que**
l'élément de confinement (6, 6') est configuré sous forme de boîte cylindrique, de préférence remplie à moitié.

5. Inclinomètre optique selon l'une des revendications 2 à 4,
**caractérisé en ce que**
l'inclinomètre présente, en tant que deuxième milieu (12),
• un gaz,
• un liquide, ou
• un corps solide, en particulier se présentant sous la forme d'un flotteur, dont la surface de contact avec le premier milieu (11, 13) définit la couche limite (14).

6. Inclinomètre optique selon la revendication 5,
**caractérisé en ce que**
le premier milieu (11, 13) et le deuxième milieu (12) présentent, pour le rayonnement (S), des degrés de transmission différents, de préférence des coefficients de transmission différents, en particulier **en ce que** l'un des deux milieux est opaque au rayonnement (S).

7. Inclinomètre optique selon la revendication 1,
**caractérisé en ce que**
le premier milieu (11, 13) est un corps solide du genre d'un pendule.

8. Inclinomètre optique selon l'une des revendications précédentes,
**caractérisé en ce que**
la source de rayonnement (2) présente un laser à semiconducteur ou une LED.

9. Inclinomètre optique selon l'une des revendications précédentes,
**caractérisé en ce que**
la source de rayonnement (2) et la caméra (9) sont disposées de manière que, dans la zone du premier milieu (11, 13), le rayonnement (S) soit guidé de manière sensiblement parallèle à une surface du premier milieu (11, 13).

10. Inclinomètre optique selon l'une des revendications précédentes,
**caractérisé en ce que**
l'élément de confinement (6, 6') est monté, indirectement ou directement, sur la caméra (9).

11. Inclinomètre optique selon l'une des revendications précédentes,
**caractérisé en ce que**
élément de confinement (6, 6') présente :
• une première surface (7) transparente, plane, et
• une deuxième surface (8) transparente,
orientées sensiblement parallèlement l'une à l'autre, la deuxième surface (8) étant plane ou incurvée.

12. Inclinomètre optique selon la revendication 11,
**caractérisé en ce que**
la caméra (9) présente une surface de détecteur (15) bidimensionnelle, orientée parallèlement à la première surface (7) et/ou à la deuxième surface (8) de l'élément de confinement (6, 6').

13. Inclinomètre optique selon l'une des revendications précédentes,
**caractérisé en ce que**
la source de rayonnement (2) et la caméra (9) sont montées sur une base (1, 1') commune, de préférence une plaquette à circuit imprimé.

14. Inclinomètre optique selon la revendication 13,
**caractérisé en ce que**
la source de rayonnement (2) et la caméra (9) sont disposées de manière que le rayonnement (S) produit soit émis perpendiculairement à la surface de la base (1, 1'), et la direction de réception de la caméra (9) est orientée perpendiculairement à la surface de la base (1, 1').

15. Inclinomètre optique selon la revendication 13 ou 14,
**caractérisé en ce qu'**
un trajet de rayon, allant de la source de rayonnement (2) à la caméra (9), présente au moins un élément de déviation (4, 5).

16. Appareil géodésique, en particulier télémètre ou barre de fil à plomb, avec un inclinomètre selon l'une des revendications 1 à 15.

17. Procédé de masure de l'inclinaison d'un appareil, en particulier d'un appareil géodésique, avec :
• une source de rayonnement (2), pour produire un rayonnement (S)
• au moins un premier milieu (11, 13), dont la position dépend de l'inclinaison ;
• un élément de confinement (6, 6') pour le premier milieu (11, 13) ;
• une caméra (9), pour enregistrer des images ; et
• une unité d'évaluation (10), pour déterminer l'inclinaison de l'appareil ;
comprenant les étapes consistant à :
- produire une image sur la caméra (9), au moyen du rayonnement (S) généré par la source de rayonnement, l'image contenant l'allure d'une couche limite au moins d'une partie du premier milieu (11, 13),
- enregistrer et convertir l'image en des signaux, au moyen de la caméra (9),
- déterminer l'inclinaison de l'appareil, à partir des signaux, au moyen de l'unité d'évaluation (10),
**caractérisé en ce que**
l'allure de la couche limite (14) est décomposée suivant une certaine résolution, et l'allure de la couche limite (14) est évaluée, de manière à déterminer l'inclinaison.
**caractérisé en ce que**

18. Procédé selon la revendication 17,
**caractérisé en ce que**
l'inclinaison de l'appareil est déterminée à partir de l'orientation et de la forme de la couche limite (14).

19. Procédé selon la revendication 17 ou 18,
**caractérisé en ce que**,
lors de la génération d'une image, le rayonnement (S) est guidé sensiblement parallèlement à une surface du premier milieu (11, 13).

20. Procédé selon l'une des revendications 17 à 19,
**caractérisé en ce que**
la détermination de l'inclinaison s'effectue en prenant en considération :
• l'angle du premier milieu (11, 13) dans l'image, et
• la position absolue du premier milieu (11, 13) dans l'image.

21. Procédé selon l'une des revendications 17 à 20,
**caractérisé en ce qu'**
un signal est émis lors de l'atteinte ou du dépassement d'une valeur d'inclinaison susceptible d'être prédéterminée.

22. Procédé selon l'une des revendications 17 à 21,
**caractérisé en ce que**,
lors de la détermination de l'inclinaison, des erreurs imputables à des effets de la température et/ou à des pertes de substance, au moins du premier milieu (11, 13), sont prises en considération, en particulier sont éliminées.

23. Procédé selon l'une des revendications 17 à 22,
**caractérisé en ce que**
lors de la génération d'une image, une couche limite (14), sensiblement plane, du premier milieu (11, 13) est imagée.

24. Procédé selon la revendication 23,
**caractérisé en ce que**
l'étendue, la forme et/ou la position de la couche limite (14) est/sont prise(s) en considération lors de la détermination de l'inclinaison de l'appareil.
